# EUROPEAN PATENT APPLICATION

(11) **EP 1 424 685 A1**
(43) Date of publication of application: **02.06.2004**
(21) Application number: 02026812.4
(22) Date of filing: 28.11.2002
(51) Int. Cl.: G10L 15/06

(54) **Method for generating speech data corpus**

(71) Applicant: Sony International (Europe) GmbH, 10785 Berlin (DE)
(72) Inventor: Giron, Frank, c/o Sony International (Europe) GmbH, Heinrich-Hertz-Str. 1, 70327 Stuttgart (DE)
(74) Representative: Müller - Hoffmann & Partner

(57) **Abstract**

A method for generating speech data is proposed. The inventive method comprises steps of generating, providing and/or recording (S1) undisturbed speech (USp). Additionally, said undisturbed speech is acoustically simulating and/or reproduced (S2) as primary speech output (PSpO) by using an artificial sound source device (SSD) having sound characteristics which are at least comparable to that of a human speaker. Further, a step of recording (S3) said reproduced primary speech output (PSpO) or a derivative thereof as environmental speech (ESp) is provided.

## Description

The present invention relates to a method for generating speech data. More particular, the present invention relates to a method for generating speech data using an acoustic environment simulation method.

Nowadays, many electronic appliances are equipped with speech processing and/or speech recognizing functionalities to enable a user for such an equipment to control the equipments functions in a particular reliable and convenient manner.

For a training phase for such a speech processing or speech recognizing functionality training speech data bases are necessary. In particular, speech data bases are necessary for such training features which take into account sounds and noise in the environment and/or the environments interaction with the speech attached by a user to enable a more realistic training situation. Such environmental speech data bases are hard to obtain.

### A Introduction

This proposal tries to make first a catalogue of possible parameters variation in a living room situation and extract those parameters, which should be taken into consideration from those, which can be neglected.

The notion living room shall mean in the inventions' context the general situation of a room where one main speaker wants to control or perform something using a speech-controlled device. There can also be one or more concurrent speakers. Active devices may be present which contribute to the general disturbance of the target speech information. This general definition includes in particular also meeting rooms for example.

According to the present invention, also a proposals for recording procedures are presented which are adapted to simulate a real life situation in a reproducible way with a minimum of effort.

### B Characterization

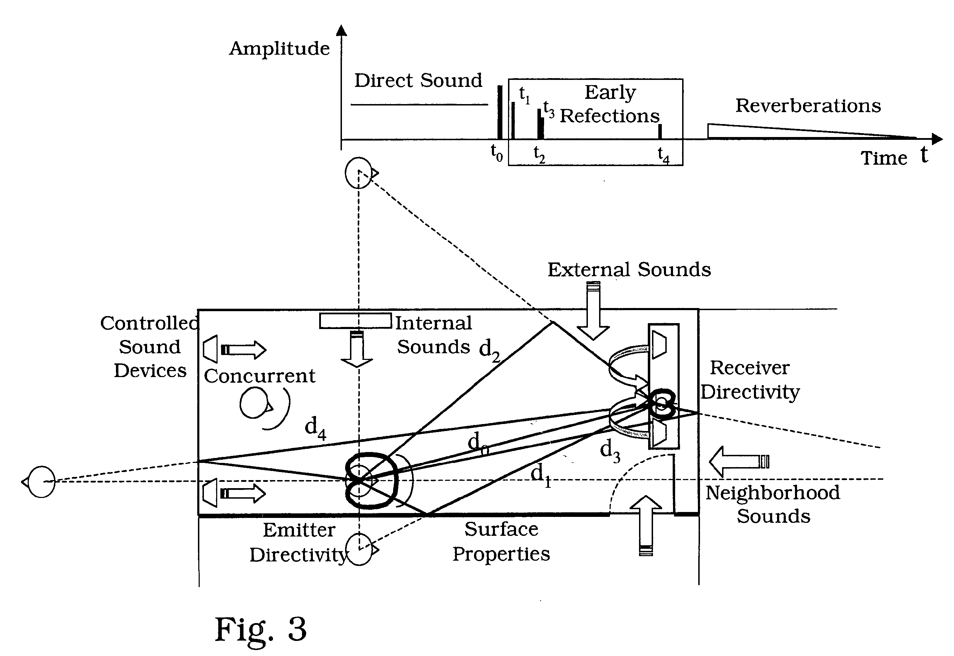

Figure 3 gives an outline of the different points to be taken into account in a far-field situation in such a living room.

The main assumptions, which will be used here, are that the conditions of linear acoustics are valid. Additionally, only the range of audible frequencies is considered. Under these assumptions, the influence of the room itself on the speaker as a linear filter, here called the room channel, can be taken into account. The other environmental conditions, here called the environmental channel, are added, if properly measured and/or simulated, to the filtered emitter signal.

In the following, it is tried to isolate the different aspects on the chain of what is going on acoustically from a speaker trying to use a vocal command in such a room. It starts from the emitter up to the receiver, through the room and environment channels.

### Human speaker as an emitter

This is the starting point, since he/she is the assumed interesting source of information for the receiver. The following parameters can be extracted if one tries to isolate the diverse influences on the signal emitted by this speaker.

Voice characteristics : The gender, age, etc. are already well known parameters, which influences the recognition rate.

Corpus spoken : Single commands, spontaneous speech, large vocabulary, etc.

Directional characteristic : A human speaker does not emit the sound uniformly like a omnidirectional point source. The direction dependency of the emission is usually characterized by the directional characteristic or directivity measured in an anechoic room. It is normally speaker dependent, e.g. due to the influence from head and torso dimensions. It is also speech signal dependent, since the radiation e.g. depends on the mouth aperture and the phoneme characteristics. It is also posture dependent, the relative orientation and position of the head, arms, torso, and legs influences the pattern and finally also dependent on the distance where the receiver is placed. So, a(distinction is made between near and far field.

For feasibility reasons, in the case of live recordings with real speakers we would have to restrict ourselves to a few configurations of the posture only. For simulations, the most ideal case would be to use a mannequin containing a mouth simulator. However, the price of this mannequin is relatively expensive and it is not very handy for transport. The cheapest approximation, which can be used, would be a loudspeaker with a directivity pattern approximating the directivity characteristics of a speaker.

Position in room : (a) Static - The speaker is sitting or standing without moving. This is basically unrealistic in real life, but convenient for measurement. This is perhaps a good assumption if the speaker is assumed to be sitting in a comfortable couch or chair.
(b) Dynamic - The speaker moves in the room while speaking. It should be verified here if we also want to have this situation. This is certainly not reproducible, but could be perhaps used for testing purpose.

Orientation in room : (a) Static - The speaker is facing or not the receiver. This influences the direct sound and mostly the early reflection pattern. It can perhaps be assumed that most of the time the user will face the device in a real living room situation. However, other situations could occur where the user would like to control the device from the next room, in this case, the received field would be mostly reverberant and the orientation does not play an important role.
(b) Dynamic The speaker is turning himself (or his head) while speaking.

### Room Channel

Basically, in a quiet room, the room properties define the main characteristics of the impulse response, for instance reflections and reverberation. The main following factors influence these responses.
Geometry : Volume, surface, as well as disposition of the walls, ceiling and floor in the room may be taken into account. Variable configurations may be taken into account, e.g. windows and doors are opened or closed.

Surface properties : Absorbing materials, e.g. carpet, curtains, or reflecting materials, e.g. (concrete, wood, linoleum, on the walls, ceiling and floor may be considered. If the room contains also a lot of curtains, for example, this influences the absorption characteristics of the room. If the curtains are opened, the reverberation is increased due to the reduction of absorbing surfaces. Depending on the room it could be useful to make measurement in different configurations.

Furniture : Different types may be taken into account: tables, chairs, couch, electronic devices. Depending on their size, they result in a more or less important contribution to the final impulse response. The respective positions in the room may be important. If there is no drastic change in the furniture configuration, the influence on the impulse response is not too important. An exception occurs when big furniture is placed directly between the speaker and the receiver. This influences the direct sound and the early reflections.

### Environmental channel

Here is a rough classification of the other sounds which can influence the receiver field, but which are more difficult to control, measure or reproduce.

Background sounds : These sounds or noises are always present in a room normally. The only exceptions are very good isolated anechoic or conference rooms. They are classified in two subcategories in the following.
Neighborhood sounds - Under this term are included here the indirect sounds due to propagation or vibration through the walls, floor, ceiling or doors coming from next rooms (kitchen, bathroom, etc.) or apartments (neighbor playing the piano, singing or having his TV or Hi-fi played loudly). These are certainly very difficult (if not impossible) to reproduce or isolate but are always more or less present in a real measuring session.
External sounds - Under this term are included here also indirect sounds like street or nature noises outside of the building, which can be more or less important depending on the location of the apartment/house. Moreover, if the external doors or windows are opened, they can represent a non-negligible influence to the environmental channel. Here also, this is certainly impossible to reproduce. It can be only assumed that a particular recording reflects almost always the general conditions in the room. For a particular room, it should be tried to get representative samples of the different possible situations.

Internal sounds : Under this term are included sounds, which are generated directly inside of the room, but not predictable. If devices like air conditioner are present in the room for example they influence very much the final sound field.

This is certainly important for meeting room. Others are phone ring, paper noises (if your partner is reading the journal while you are watching TV), etc.

Controlled sounds : These are the sounds produced by devices where at least some knowledge can be available for further processing like TV, surround or Hi-fi signals.

### Microphones as a receiver

This is the last but not the least part of the chain, since it conditions the way the final system will "perceive" the complete sound from which the original emitter sound should be extracted.

Microphone types : There are actually thousands of microphone types available with all their particularities, but the limitations comes soon when looking at the prices and characteristics. Among others, the following ones are important.
Frequency response - As a rule, of thumb, the more the frequency range is extended and the flatter the response is, the best we are assumed to pick up the original sound field (and the more expensive the microphone is). This is good if we want to pick-up the room characteristics as exactly as possible when measuring the room impulse response. But it can be bad for the final SNR when recording speech since it can pick-up all possible background noises in the room (also those which are sometime not audible). Basically, it is still better to have more information that can be eventually suppressed by further processing than having a microphone with too bad frequency response where important frequencies could be lost. However, care has to be taken with this processing.
Directional characteristic - Here also the term occurs again and it conditions also very much the way the signal will be picked up by the receiver. Since, as the reciprocal of the emitter, it will pick more or less of the signal depending on its direction, it conditions also the way the room channel is measured. Basically, the most important directional characteristics encountered for speech application are the omnidirectional, directive (cardioid) and super directive (microphone array) ones. For the judgement of speech quality in cars, binaural technology, which is basically composed of a dummy head including two microphones, is also used to pick up the sound, as human ears would do. The recorded sound can be played back by headphones or analyzed by further algorithms to derive the speech intelligibility or other criteria. In this case, the directivity of each ear is measured in what is called HRTF (Head Related Transfer Function), it includes frequency and phase information mostly in a form of impulse response.
Sensitivity - This conditions the SNR of the microphone. A microphone should be sensitive enough to pick up the speech spoken in the far field, but higher sensitivity is also expensive and is also associated with a higher electrical noise.

Position in room : The receiver should be placed at an adequate static place in the room. This position should be if possible far away from too disturbing noise sources (placing it directly under the air conditioning would be a bad idea). However, it is certainly the final application, which will fix this position anyway if we consider a standalone device performing the whole processing.

Orientation in room : Similar remarks hold as before. Ideally the receiver should be able to pick up the emitter out of the other sources. Dynamic system like microphone array technology could be envisaged but requires a lot of experimental knowledge.

It is an object of the present invention to provide a method for generating speech data which is capable for producing speech data with more realistic and environmental features in a particular reliable and convenient manner.

The object is achieved by a method for generating speech data with the characterizing features of independent claim 1. Alternatively, the object is achieved by a method for generating speech data with the characterizing features of the independent claim 2. Preferred embodiments of the inventive method for generating speech data are within the scope of the dependent sub-claims.

The inventive method for generating speech data comprises a step of generating, providing and/or recording undisturbed speech of a speaker, and/or undisturbed speech data being descriptive for undisturbed speech in a collecting phase or mode. Further, a step of simulating, generating and/or reproducing, in particular acoustically, a primary speech output using or based on said undisturbed speech and/or using or based on said undisturbed speech data in a reproducing phase or mode, wherein an artificial sound source device is used which is adapted or chosen to have sound characteristics which are at least comparable to that of a human speaker. Additionally, a step of generating and/or recording said primary speech output and/or a derivative thereof as environmental speech and/or speech data thereof as environmental speech data in a recording mode or phase is provided.

Therefore, it is a basic idea of the present invention to provide a method for generating speech data comprising a collecting phase or mode, a reproducing phase or mode, and a recording phase or mode.

In the first or collecting phase or mode original or undisturbed speech from a speaker is generated, provided and/or recorded. Additionally or alternatively, speech data which are descriptive for undisturbed speech of a speaker are generated, provided and/or recorded. In the reproducing phase or mode using or based on said undisturbed speech or using or based on said undisturbed speech data which is descriptive for undisturbed speech a primary speech output is simulated, regenerated and/or reproduced. This may be done acoustically or non-acoustically, for instance via electronic transmission. During the step of regenerating and/or reproducing an artificial sound source device is used. Said sound source device is used instead of an original speaker. To ensure a high degree of similarity between the artificially reproduced speech output and the undisturbed speech said sound source device is chosen and/or adapted to have sound characteristics which are at least comparable to the sound characteristics of a human speaker. Finally in a recording mode or phase the primary speech output and/or a derivative thereof is generated and/or recorded as environmental speech. Additionally or alternatively, speech data of said environmental speech may be recorded as environmental speech data being descriptive for said environmental speech.

It is therefore a basic aspect of the present invention to use undisturbed speech or speech data thereof for recording a speech output based on said undisturbed speech or the speech data thereof without involving a user but involving a sound source device for the reproduction and regeneration. Therefore, given data bases of undisturbed speech can be used for such a reproduction phase and recording phase so as to modify the input undisturbed speech data base into an environmental speech data base.

In other words, it is an idea of the present invention to reproduce pure and/or undisturbed speech using an artificial sound source device - and not with a human speaker- said artificial sound source device having sound characteristics comparable to those of a human speaker so as to obtain simulated and artificial environmental speech. Additionally, room channel characteristics are or can be taken into account so as to make the environmental speech more realistic. It is a further idea of the present invention to combine said - in particular pure and/or undisturbed - speech - e.g. from a given speech database - with pure environmental sound and/or noise - in particular by room channel characteristics - to obtain simulated environmental speech.

According to the alternative solution of the object of the present invention the inventive method for generating speech data comprises a step of generating, providing, and/or recording undisturbed speech of a speaker and/or undisturbed speech data being descriptive for undisturbed speech in a collecting phase or mode. Additionally a step of simulating, generating and/or reproducing - in particular acoustically - primary speech output is provided using or based on said undisturbed speech and/or using or based on said undisturbed speech data in a reproducing phase or mode, wherein an artificial sound source device is used which is chosen and adapted to have sound characteristics which are at least comparable to that of a human speaker. In addition to the first proposed solution of the object of the present invention the alternative solution comprises a step of reproducing, simulating and/or generating primary control sound output, in particular as a function of an undisturbed controlled sound database. Further, a step of recording environmental background/internal sound data is performed. Finally, a step of recording and/or generating primary speech output, primary control sound output and environmental sound as environmental speech is carried out according to a second alternative.

Main ideas of the present invention may be summarized as follows: An object is to replace exhaustive speech data collection with human speakers for training purpose in real rooms by recordings and/or simulations based on the use of sound source devices SSD, e.g. loudspeakers.

The main steps are:
1. Simulation of a human speaker speaking in a room taking into account in the SSD of the radiation characteristics or directivity and frequency characteristics of the emitter or speaker. There are inter alia two possibilities:
   a. Use the complete acoustical solution - speaker versus Loudspeaker - by placing the SSD in the room and reproducing the Undisturbed speech (Usp) through it, which consequently creates the Primary Speech Output (PSpO) as used in the terminology of the draft. The resulting speech output contains then the environmental modifications caused by the room (reflections and reverberation).
   b. Use the complete simulation solution (sim SSD) based on the measured/simulated impulse response of the SSD in the room. The impulse response is then used to convolute with the UspD instead of being reproduced through the loudspeaker.
      - In the case of the measured solution, the impulse response can be preliminary recorded by the TSP method (for example), but it can be done by any other method to determine an impulse response.
      - In the case of a simulation (to answer to the question on p.4, line 35), it could be theoretically possible to generate also artificially an impulse response based on the geometric and acoustical information mentioned on p.5, lines 3-5 in the draft.
2. Simulation of controlled sound sources CSSD or SIM CSSD whenever it is possible. If the controlled sound source - like TV, Hifi, etc. - can be assumed to be linear, it is also possible to use the same principles as 1b using as input data the Undisturbed Controlled Sound Database. If it is not linear, the sound can be reproduced and/or recorded separately in the Environmental Controlled Sound Database.

It is possible to divide any simulation in different steps, whereas these steps can be realized partly or totally acoustically by using the loudspeaker - generalized as artificial sound source device SSD in the invention - which is emitting the undisturbed speech USp. But it can be also partly or totally computer simulated by using the room impulse convolution principle and by adding previously recorded background/internal noises. This room impulse has also to be measured previously - eventually simulated - before making the complete simulation steps.

According to a preferred embodiment of the inventive method one or any plurality of the following properties of the artificial sound source device is used, taken into account and/or adapted to make its sound characteristics comparable to that of a human speaker:
- frequency characteristics,
- spatial directional characteristics and/or directivity characteristics, in particular in a statical and/or dynamical manner.

Additionally or alternatively, said step of - in particular acoustically - regenerating and/or reproducing said primary speech output and/or said step of recording said regenerated and/or reproduced primary speech output or a derivative thereof is performed in an environment room, in particular thereby realizing a room channel and/or thereby realizing and/or adding environmental properties in/to said environmental speech and/or in/to said environmental speech data. This is one measure to incorporate into the more or less undisturbed speech more realistic aspect by carrying out the reproduction and the recording in an environment room which is capable of adding more realistic and environmental properties to the environmental speech and/or to the speech data thereof.

With respect to said environment room or room channel one or any pluralities of the following properties are used, taken into account and/or adapted:
- geometry, in particular volume, shape, surface,
- surface properties, in particular absorbing and/or reflecting properties,
- occupying entities, e.g. furniture or the like.

According to a preferred embodiment of the present invention the inventive method for generating speech data further comprises a step of - in particular acoustically - generating, providing and/or recording environment sound and/or environment sound data being descriptive for environment sound and/or a step of - in particular acoustically - regenerating and/or reproducing environment sound output based on said environment sound and/or on said environment sound data simultaneously with said primary speech output, thereby realizing an environment channel and/or thereby realizing and/or adding environmental properties in/to said environmental speech and/or in/to said environmental speech data. According to this particular measure, more realistic properties and features are added to the more or less undisturbed speech. That means, that sound and noise from a typical environment may be included into the environmental speech or environmental speech data being representative for environmental speech.

In a preferred embodiment of the inventive method one or any plurality of the following entities or properties of the environmental channel are used, taken into account and/or adapted:
- background sounds or noise, particular neighbourhood sounds or noise, external sounds or noise and/or the like,
- internal sounds or noise,
- controlled sounds or noise or controllable sounds or noise.

According to a further preferred embodiment of the inventive method an environmental speech data base is generated using a data base of undisturbed speech for the steps of - in particular acoustically - simulating, regenerating and/or reproducing primary speech output and of generating and/or recording said primary speech output.

These and further aspects of the present invention will become more elucidated taking into account the following first remarks:

The creation of speech databases in real environmental conditions for training or testing purpose is currently a very exhaustive task. One purpose of this invention is to provide a set of measurement and signal processing methods to artificially create this kind of database in a relatively accurate way, which also reduces tremendously the final efforts for this task.

It is an aspect of the inventive concept to combine several components which belong to the fields of room acoustics, digital signal processing and speech processing. What is in particular new is to have a careful ordering of these components together with the measurement settings to successfully arrive to the desired results.

One of the measurement methods is the so called technique of impulse response measurement or TSP (Time Stretched Pulse) which may be in particular used for experiments related of the inventive method. However, the invention described here is independent of any explicit signal processing method used for measuring an impulse response.

A problem to be solved by this invention is the acquisition of a speech database for training or testing purposes within a speech recognition system for example. It can be referred to as a simulated speech database.

The simulated database can also be used for other signal processing purposes. What is important are the details of the measurement settings, like taking into account the characteristics of the emitter source, which have not been taken into account in the prior art. This is what this invention proposes here to solve.

Basically, one of the important ideas here, where there is a wish for protection as compared to the state of the art is to have a very careful setting for the impulse measurement procedure. In particular, the simulation of the emitter or human speaker is a very important point for this invention.

Up to now, the directivity and frequency characteristics of the emitter are not taken into account. The room impulse responses are simply measured with any kind of loudspeaker. However, in the case of the simulation of a human speaker it is very important to take care of this original sound source radiation, since the resulting emission can change very much the final impulse responses in the measured environment. As a consequence, the simulated data do not reflect the precise acoustic situation present in the real conditions.

For this reason, this invention prescribes the use of a loudspeaker for which the radiation characteristics approaches that of a human speaker. Of course, the use of any other device which can simulate more precisely the radiation characteristics of the human speaker,e.g. like an acoustic mannequin, can be also taken into account since it doesn't change the basic principles of the invention.

Another important aspect is to try to simulate so called controlled sound sources, e.g. TV, radio, hi-fi components, etc., for which a linear effect can be expected. According to this, different environmental situations can also be simulated successfully without the need of making recordings in the real environment.

Finally, the aspect of the addition of the background noise is also an important point for a careful simulation.

As already mentioned before, the main advantageous difference over the prior the art in this field is the aspect of taking into account more carefully the emitter sound source, e.g. the directivity and frequency characteristics. The way to perform the measurements of all linear channels or of the controlled sound sources) in a very precise way to respect the balance between the different noise sources and the main source of information, i.e. the speaker and the controlled sound sources, is also an advantage.

In the following, the invention will be described in more detail taking reference to the accompanying figures on the basis of preferred embodiments of the invention.
- **Fig. 1**: is a schematical block diagram describing aspects of the communication structure involved in the present invention.
- **Fig. 2**: is a flow chart describing a preferred embodiment of the inventive method for generating speech data.
- **Fig. 3**: is a schematical block diagram describing aspects of the room channel and the environmental channel, in particular with respect to an emitter and a receiver in a living room situation.
- **Fig. 4**: is a flow chart describing a preferred embodiment of the inventive method for generating speech data.

In the following, same elements and functions are indicated by the same reference symbols, and their detailed description is not repeated for each occurrence thereof.

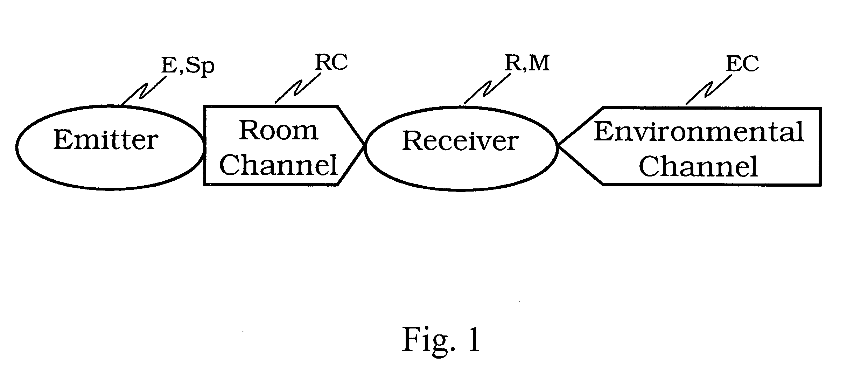

Fig. 1 is a schematical block diagram describing aspects of the communication structure involved in the present invention.

From an emitter E, for instance from a speaker Sp, undisturbed speech USp is emitted and reaches after interaction with the respective room - which is describe by an abstract room channel RC and in which said undisturbed speech USp is uttered - a receiver R, for instance a microphone M or the like. Additionally, an environment channel EC is provided giving rise to sound and noise from the environment which are simultaneously received by the receiver R. Also, an interaction of the environment channel EC with or within the room channel RC may be taken into account.

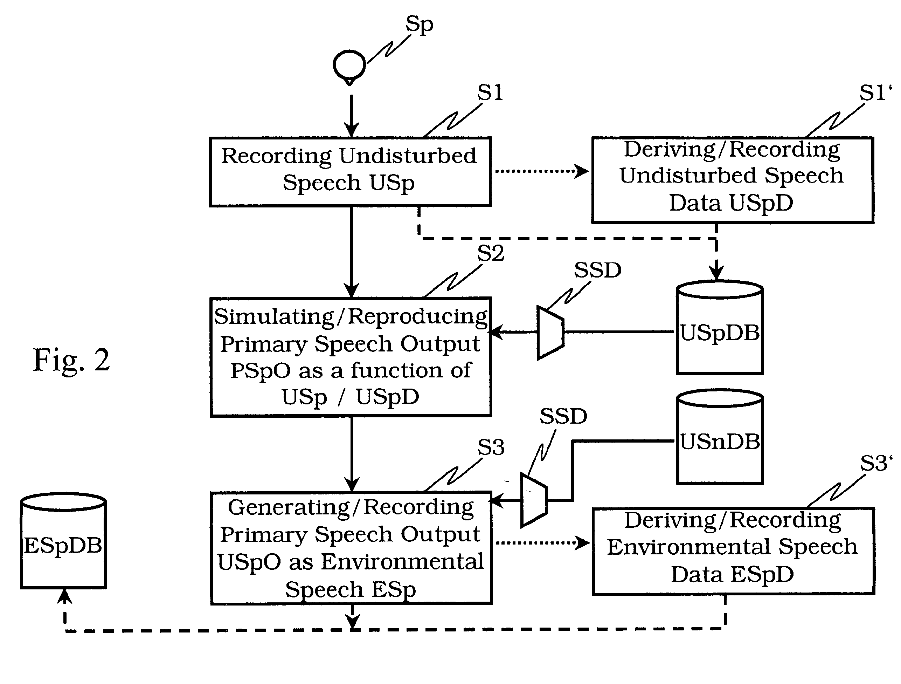

Fig. 2 is a flow chart describing a preferred embodiment of the inventive method for generating speech data.

In a first step S1 undisturbed speech USp here from one speaker Sp is received and recorded to build up an undisturbed speech data base USpDB. Additionally, in an optional step S1' undisturbed speech data USpD may be derived for or from said undisturbed speech USp, e.g. also to be recorded to said undisturbed speech data base USpDB.

In a second step S2 e.g. from said undisturbed speech data base USpDB via an artificial sound source device SSD for instance via a loud speaker primary speech output PSpO as a function of said undisturbed speech USp and/or of said undisturbed speech data USpD is acoustically reproduced in a particular environment room and/or simulation. Simultaneously, recorded environment sound ESn and/or sounds based on environment sound data ESnD from a given environment sound data base EsnDB may also be reproduced.

In a third steps S3 and S3' said primary speech output PSpO reproduced - eventually together with environment sound ESn and/or sounds based on environment sound data ESnD - is recorded as environmental speech ESp e.g. in an environmental speech data sase ESpDB.

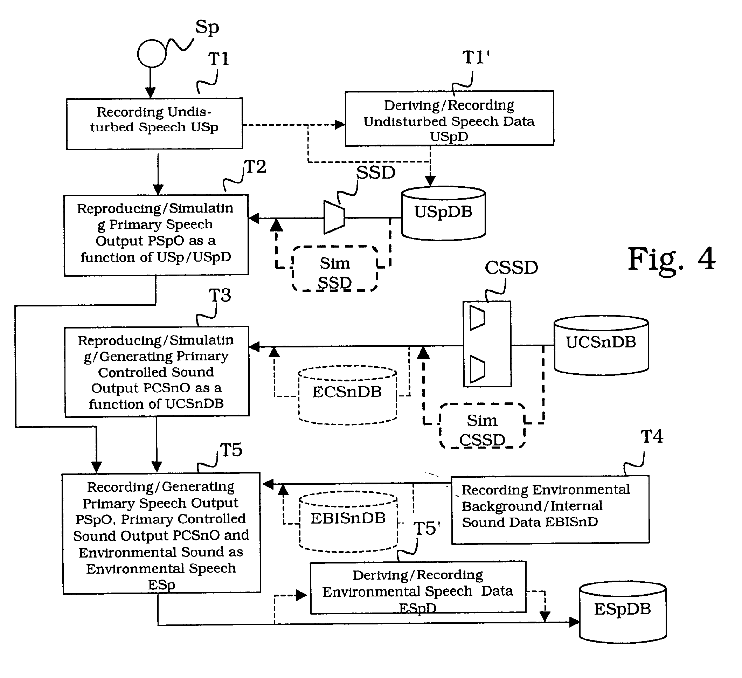

Fig. 4 shows by means of a flowchart another preferred embodiment of the inventive method for generating speech data in a first step T1 undisturbed speech Usp, here again from one speaker Sp, is received and recorded to build up an undisturbed speech database USpDB. Additionally, in an optional step T1' undisturbed speech data may be derived for or from said undisturbed speech USp, e. g. also to be recorded in said undisturbed speech database USpDB.

In a second step T2 of this alternative embodiment, e. g. from said undisturbed speech data base USpDB via an artificial sound source device SSD, for instance via a loudspeaker primary speech output PSpO as a function of said undisturbed speech USp and/or of said undisturbed speech data USpD is acoustically reproduced, in particular in an environment room, and/or simulated.

In a third step T3 primary controlled sound output PCSnO is generated, simulated and/or reproduced as a function of data from an undisturbed control sound database, in particular involving a controlled sound source device CSSD for reproduction or a simulated controlled sound source device for simulation. Additionally, an environmental background/internal sound database may be involved in the step of reproducing or simulating.

In a further step T4 which might be processed sequentially or parallelly environmental background/internal sound data may be recorded so as to generate an environmental background/internal sound database EBISnD.

Based on the environmental background/internal sound database EBISnD in a further step T5 primary speech output PSpO, primary control sound output PCSnO and environmental sound ESn may be generated and/or recorded so as to form environmental speech ESp which is then recorded in a environmental speech database ESpDB with the optional step T5' of deriving and/or recording environmental speech data ESpD from said environmental speech ESp.

### List of Reference Symbols

- **CSSD**: Controlled Sound Source Device
- **E**: Emitter, speaker, loud speaker
- **EBISnDB**: Environmental Background/Internal Sound Database
- **ECSnDB**: Environmental Controlled Sound Database
- **EC**: Environmental channel
- **ESn**: Environmental sound
- **ESnD**: Environmental sound data
- **ESnDB**: Environmental sound data base
- **ESnO**: Environmental sound output
- **ESp**: Environmental speech
- **ESpD**: Environmental speech data
- **ESpDB**: Environmental speech data base
- **M**: Microphone, receiver
- **PSpO**: Primary speech output
- **R**: Receiver, microphone
- **RC**: Room channel
- **Sim CSSD**: Simulated Controlled Sound Source Device(s)
- **Sim SSD**: Simulated Sound Source Device
- **Sp**: Speaker, emitter
- **SSD**: Sound source device, loud speaker
- **UCSnDB**: Undisturbed Controlled Sound Database
- **USp**: Undisturbed speech
- **USpD**: Undisturbed speech data
- **USpDB**: Undisturbed speech data base

## Claims

1. Method for generating speech data comprising the steps:
- generating, providing and/or recording (S1) undisturbed speech (USp) of a speaker and/or undisturbed speech data (USpD) being descriptive for undisturbed speech (USp) in a collecting phase or mode,
- simulating, generating and/or reproducing (S2) - in particular acoustically - primary speech output (PSpO) using or based on said undisturbed speech (USp) and/or using or based on said undisturbed speech data (USpD) in a reproducing phase or mode,
- wherein an artificial sound source device (SSD) is used which is chosen and adapted to have sound characteristics which are at least comparable to that of a human speaker, and
- generating and/or recording (S3) - in particular acoustically - said regenerated and/or reproduced primary speech output (PSpO) and/or a derivative thereof at least as a part of environmental speech (ESp) and/or the speech data thereof at least as a part of environmental speech data (ESpD) in a recording phase or mode.

2. Method for generating speech data comprising the steps:
- generating, providing and/or recording (T1) undisturbed speech (USp) of a speaker and/or undisturbed speech data (USpD) being descriptive for undisturbed speech (USp) in a collecting phase or mode,
- simulating, generating and/or reproducing (T2) - in particular acoustically - primary speech output (PSpO) using or based on said undisturbed speech (USp) and/or using or based on said undisturbed speech data (USpD) in a reproducing phase or mode,
- simulating, generating and/or reproducing (T3) primary controlled sound output (PCSnO), in particular as a funtion of an undisturbed controlled sound data base (UCSnDB),
- recording (T4) environmental background/internal sound data EBISnD, in particular to form an environmental background/internal sound database (EBISnDB), and
- generating and/or recording (T5) - in particular acoustically - said regenerated and/or reproduced primary speech output (PSpO) and/or a derivative thereof, primary controlled sound output (PCSnO) and/or environmental sound at least as a part of environmental speech (ESp) and/or the speech data thereof at least as a part of environmental speech data (ESpD) in a recording phase or mode.

3. Method according to any one of the preceding claims,
wherein one or any plurality of the following properties of the artificial sound source device (SSD) is used, taken into account and/or adapted to make its sound characteristics comparable to those of a human speaker:
- frequency characteristics,
- spatial directional characteristics and/or directivity characteristics, in particular in a statical and/or dynamical manner.

4. Method according to anyone of the proceeding claims,
- wherein said step of a - in particular acoustically - simulating, regenerating and/or reproducing (S2) said primary speech output (PSpO) and/or said step (S3) of in particular acoustically recording said primary speech output (PSpO) or a derivative thereof is performed in an environment room,
- in particular thereby realizing a room channel (RC) and/or thereby realizing and adding environmental properties in/to said environmental speech (ESp) and/or in/to said environmental speech data (ESpD).

5. Method according to claim 4,
wherein one or any plurality of the following properties of the environmental room or room channel (RC) are used, taken into account and/or adapted,
- geometry, in particular volume, shape, surface,
- surface properties, in particular absorbing and/or reflecting properties, occupying entities, e.g. furniture or the like.

6. Method according to anyone of the proceeding claims,
further comprising steps of:
- generating, providing and/or recording environment sound (ESn) and/or environment sound data (ESnD) being descriptive for environment sound (ESn) and/or
- regenerating or reproducing, in particular acoustically environment sound output (ESnO) based on said environment sound (ESn) and/or on said environment sound data (ESnD) simultaneously with said primary speech output (PSpO),
- thereby realizing an environment channel and/or thereby realizing and/or adding environmental properties in/to said environmental speech (ESp) and/or in/to said environmental speech data (ESpD).

7. Method according to claim 6,
wherein one or a plurality of the following entities or properties of the environmental channel are used, taken into account and/or adapted:
- background sounds or noise, particular neighbourhood sounds or noise, external sounds or noise and/or the like,
- internal sounds or noise,
- controlled sounds or noise or controllable sounds or noise.

8. Method according to anyone of the proceeding claims,
wherein an environmental speech data base is generated using a data base of undisturbed speech (USp) for the steps of simulating, regenerating and/or reproducing (S2) - in particular acoustically - primary speech output (PSpO) and of recording (S3) said - in particular acoustically - regenerated and/or reproduced primary speech output (PSpO).
